# EUROPEAN PATENT APPLICATION

(11) **EP 1 176 125 A1**
(43) Date of publication of application: **30.01.2002**
(21) Application number: 01202812.2
(22) Date of filing: 24.07.2001
(51) Int. Cl.: C04B 24/20, C04B 103/61

(54) **Corrosion inhibitor for cementitious compositions**

(30) Priority: 24.07.2000 EP 00202648
(71) Applicant: Akzo Nobel N.V., 6824 BM Arnhem (NL)
(72) Inventor: Motzet, Hubert, 48720 Rosendahl (DE)
(74) Representative: Schalkwijk, Pieter Cornelis, c.s.

(57) **Abstract**

Corrosion inhibitor for compositions based on inorganic binders. The corrosion inhibitor comprises a metal salt of at least one organic sulfonic acid compound that has a molecular weight (Mw) below 1,200, preferably an aromatic sulfonic acid compound or its metal salt, for example the calcium salt of a dialkyl aromatic sulfonic acid. The composition based on an inorganic binder may comprise 0,01 and 5wt.%, preferably between 0,1 and 1wt.% of such a corrosion inhibitor. Such a composition is particularly useful as a repair mortar for the repair of steel reinforced concrete affected by corrosion.

## Description

The invention relates to a corrosion inhibitor for use in compositions based on inorganic binders, such as cement, concrete or mortars, e.g., mortars for repairing reinforced concrete.

Reinforced concrete is used in applications where it is subjected to carbonation and chloride ingress. Carbonation is caused by weathering and environmental influences. Carbon dioxide from the environment reacts with the calcium hydroxide in the cement, forming carbonates. The carbonates reduce the pH of the cement matrix from about 12 to below 9. When the pH is lower than 9, corrosion of the steel reinforcement is initiated. This corrosion is accelerated under the influence of chlorides, e.g., from contaminations, thawing salts or sea water. The subsequent expansive corrosion products cause the concrete to crack or spall. The strength of the construction breaks down and the construction is damaged.

Generally, corrosion inhibitors for cementitious compositions are based on nitrates. For example, Japanese patent application JP-A 73-66961 discloses a corrosion inhibitor based on nitrates mixed with lignosulphonate and a high-molecular weight aromatic sulphonic acid salt.

EP-A 635 463 proposes the use of amine salts as corrosion inhibitors in cement or concrete compositions. The amine salt of sulphanilic acid is mentioned as a particular example.

EP-A 0 941 975 also discloses amine based corrosion inhibitors, for instance the amine salts of an acid. Although these compounds result in improved corrosion resistance, the time until mechanical breakdown is not improved.

Several other corrosion inhibitors for reinforced concrete have been proposed, such as calcium nitrite, proposed in US 4,092,109. Phosphonic acid based corrosion inhibitors for steel reinforcement in concrete are disclosed in GB-A 2,248,612.

The object of the present invention is to improve corrosion inhibition in constructions made of curable compositions based on inorganic hydraulic binders, for instance in combination with steel reinforcement.

This object is achieved by using a corrosion inhibitor which comprises at least one organic sulphonic acid compound, or its salt formed with an inorganic counterion, and has a molecular weight Mw below 1,200, preferably below 1,000.

Optimum results are obtained if the inhibitor comprises at least one aromatic sulphonate compound. Although the aforementioned Japanese patent application JP-A 73-66961 teaches that high molecular weight aromatic sulphonates have a corrosion inhibiting effect only in particular mixtures with nitrates and lignosulphonate, it has now surprisingly been found that organic sulphonic acid compounds with a molecular weight below 1,200 have a corrosion inhibiting effect of their own, without any need for mixing them with other components.

Aromatic sulphonates are also used in paints as corrosion inhibitors. Paint films typically have a very limited thickness, which allows direct interaction between the incorporated additives and a steel substrate. Moreover, corrosion processes on coated steel are different from corrosion processes on cement packed steel with chlorines acting on the steel in an alkaline environment. Still, it was surprisingly found that the aromatic sulphonates did have a corrosion inhibiting effect on steel in such an environment, even without any direct interaction with the steel due to the thickness of the cement layers.
Suitable aromatic sulphonates are those having an alkaryl group, e.g., alkylated benzene or alkylated naphthalene. Suitable examples of such compounds are dioctyl benzene sulphonates, didodecyl benzene sulphonates, dinonyl naphthalene sulphonates, dilauryl benzene sulphonates, lauryl cetyl benzene sulphonates, polyolefin alkylated benzene sulphonates such as polybutylene alkylated benzene sulphonates and polypropylene alkylated benzene sulphonates. Especially preferred are nonyl naphthalene sulphonates and dinonyl naphthalene sulphonates.

Preferably, metal salts of organic sulphonate compounds are used. Alkali metals from Group IA of the Periodic System, e.g., sodium, potassium or lithium, and the like, or an alkaline earth metal from Group IIA, e.g., calcium, barium, strontium, magnesium, and the like, or a metal from Group IIB, e.g., zinc, cadmium, and the like, can all suitably be used. Alternatively, sulphonates of metals in other groups, such as Groups IIIB, VIIIB, and IB, e.g., titanium, vanadium, chromium, manganese, iron, cobalt, nickel, copper, and the like, as well as metals in the lanthanide series can be used. Suitable non-metal salts are the ammonium salts of organic sulphonic acids.

Examples of commercially available suitable compounds are for instance Nacorr® 1352, a 50 % solution of calcium salt of dinonyl naphthalene sulphonate, and Nacorr® 6401, a powder compound consisting essentially of zinc salt of dinonyl naphthalene sulphonate on a silica carrier. Nacorr® 1352 and Nacorr® 6401 are both available from King Industries. Liquid compounds such as Nacorr® 1352 are particularly suitable for use in fresh mortar paste, whereas Nacorr® 6401 can suitably be added in powder form to a curable dry mortar.

The invention further pertains to a curable composition based on an inorganic binder which comprises a corrosion inhibitor comprising at least one sulphonic acid compound, or its salt formed with an inorganic counterion, and has a molecular weight Mw<1,200, such as the above mentioned specific examples. Preferably, the composition comprises an inhibitor content of 0.01 - 5 % by total weight. Optimum results are obtained if the inhibitor content in the composition is between 0.1 - 1 wt.%.

The inorganic binder of the composition can for instance be a cement or mortar. Portland cement, aluminous cement or mixtures thereof are suitable examples. Alternatively, the composition may comprise, e.g., chalk, slag cements, fly ash cements, or gypsum as a binder.

Additionally, the composition may comprise a polymer, e.g., a vinyl acetate or styrene acrylic copolymer. The composition may also comprise fillers. If quartz fillers are used, the particle size can be suitably varied to obtain the desired characteristics.

The composition may further comprise setting retarders, setting accelerators, aggregates, water reducers, high-range water reducers, air entraining agents, water proofing agents, anti-slipping fibres, or other additives, if so required.

The composition according to the invention may be used for the production of any kind of concrete or mortar, such as regular concrete or light concrete. The corrosion inhibitor of the present invention is specifically suitable for use in repair mortars for the repair of reinforced concrete affected by corrosion, such as the compositions based on micro-cement disclosed in EP-A 0 941 975.

Specific embodiments are further described and illustrated by the following examples. In the examples, samples are made and tested for resistance against corrosion attack. The tests are in accordance with Austrian industrial standard RVS 13.62 of the Österreichische Betonverein. The samples were made from a concrete repair mortar. A steel bar was embedded in a mortar prism, cured, and stored under voltage in a salt solution. The time until cracks appear and the mortar prism breaks down was determined. The effectiveness of the corrosion inhibitors was judged by visual evaluation of the corrosion appearance on the surface of the steel bar. Corrosion resistance is expressed as the ratio of the electrical resistance of the sample at the time of mechanical breakdown to the electrical resistance of a reference sample at its time of mechanical breakdown. The higher this ratio, the better the corrosion resistance. The reference sample was the sample of Comparative Example A, as described below.

In the examples, all percentages are percentages by weight of the total composition.

### Comparative Example A - Ideal Concrete

A reference sample was made consisting of an ideal concrete, made of Portland cement (CEM I 32.5) having an extremely low water / cement ratio of 0.5, thus having an extremely dense microstructure and extremely low permeability results. No corrosion inhibitor was used.

### Comparative Example B - Mortar composition without corrosion inhibitor

20 parts by weight of Portland cement CEM I 42.5 were mixed with 5 parts by weight of calcium aluminate cement, 70 parts by weight of quartz fillers, 3 parts by weight of a vinyl acetate ethylene copolymer (Vinnapas, available from Wacker Polymer Systems), and 1.25 parts by weight of additives (setting accelerators, retarders, and anti-slipping fibres). 50 parts by weight of the quartz fillers had a particle size below 1 mm, 10 parts by weight had a particle size between 1 - 2 mm, 5 parts by weight had a particle size between 2 - 3 mm, and 5 parts by weight had a particle size between 3 - 4 mm. No corrosion inhibitor was used.

### Comparative Examples C and D - Mortar composition with corrosion inhibitor

In Comparative Examples C and D, a mortar composition was made as in Comparative Example B using 0.75 wt.% of a corrosion inhibitor. In Comparative Example C, the corrosion inhibitor was a stoichiometric mixture of calcium nitrite and an amino alcohol. In Comparative Example D, dimethylaminoethanol was used as a corrosion inhibitor.

### Example 1

A mortar composition was made as in Comparative Example B and mixed with 0.75 wt.% of Nacorr® 1352, a 50 % solution of calcium salt of dinonyl naphthalene sulphonate.

### Example 2

A mortar composition was made as in Comparative Example B and mixed with 0.75 wt.% of Nacorr® 6401, a powder compound comprising zinc salt of dinonyl naphthalene sulphonate on a silica carrier.

The test results are given in the following Table 1.

**Table 1**

| Example: | Time until mechanical breakdown of the mortar prisms | Corrosion resistance factor |
|---|---|---|
| Comparative Example A | 8 days | 1.0 |
| Comparative Example B | 8 days | 0.9 |
| Comparative Example C | 8 days | 0.4 |
| Comparative Example D | 8 days | 1.1 |
| Example 1 | 14 days | 1.8 |
| Example 2 | 28 days | > 2 |

## Claims

1. Corrosion inhibitor for compositions based on inorganic binders, **characterized in that** the corrosion inhibitor comprises at least one organic sulphonic acid compound, or its salt formed with an inorganic counterion, and has a molecular weight below 1,200, preferably below 1,000.

2. Corrosion inhibitor according to claim 1, **characterized in that** the organic sulphonic acid compound or its salt is free of amino-functional groups.

3. Corrosion inhibitor according to claim 1 or 2, **characterized in that** the corrosion inhibitor comprises at least one aromatic sulphonate compound.

4. Corrosion inhibitor according to any one of the preceding claims, **characterized in that** the aromatic sulphonate compound is selected from the group consisting of alkylated benzene sulphonates and alkylated naphthalene sulphonates.

5. Corrosion inhibitor according to claim 4, **characterized in that** it comprises dinonyl naphthalene sulphonate.

6. Corrosion inhibitor according to any one of the preceding claims, **characterized in that** the organic sulphonate corrosion inhibitor is a salt of a metal, preferably selected from the group consisting of alkali metals from Group IA, alkaline earth metal from Group IIA, metals from Groups IIB, IIIB, VIIIB, and IB, and metals in the lanthanide series.

7. Corrosion inhibitor according to any one of preceding claims 1 - 5, **characterized in that** the organic sulphonate corrosion inhibitor is an ammonium salt.

8. Curable composition based on an inorganic binder, comprising a corrosion inhibitor according to any one of the preceding claims.

9. Composition according to claim 8, **characterized in that** the content of the corrosion inhibitor is between 0.01 and 5 wt.%, preferably between 0.1 and 1 wt.%, of the total composition.

10. Use of an organic sulphonic acid compound, or its salt formed with an inorganic counterion, as a corrosion inhibitor for compositions based on an inorganic binder, such as concrete, cement, or mortar compositions.

11. Use of a composition according to claim 7 or 8 as a repair mortar for the repair of steel reinforced concrete affected by corrosion.
